# EUROPEAN PATENT APPLICATION

(11) **EP 2 360 982 A2**
(43) Date of publication of application: **24.08.2011**
(21) Application number: 11000954.5
(22) Date of filing: 07.02.2011
(51) Int. Cl.: H04W 64/00

(54) **A method and system for determinig the location of a wireless access point using single device based power measurements**

(30) Priority: 12.02.2010 US 304114 P; 22.03.2010 US 729184
(71) Applicant: Broadcom Corporation, Irvine, CA 92617 (US)
(72) Inventor: Garrett, David, Tustin, CA 92782 (US); Buer, Mark, Irvine, CA 92617 (US); Lundgren, David Albert, Mill Valley, CA 94941 (US); Abraham, Charles, Los Gatos, CA 95033 (US); Karaoguz, Jeyhan, Irvine, CA 92606 (US); Murray, David, Mission Viejo, CA 92692 (US)
(74) Representative: Jehle, Volker Armin

(57) **Abstract**

A mobile device measures power from different locations for an encountered wireless access point, a WiFi or Bluetooth access point, and communicates the power measurements to a remote location. The remote location server collects power measurements for the encountered wireless access point from a plurality of communication devices. The remote location server determines the location of the encountered wireless access point utilizing corresponding power measurements from a single communication device. The power measurements are performed at different locations and over a period of time. The power measurements are time stamped and transmitted to the remote location server. The single communication device is selected based on quality and/or availability of corresponding power measurements for the encountered wireless access point. The determined location of the encountered wireless access point is stored into a reference database so as to be shared among the plurality of communication devices.

## Description

### CROSS-REFERENCE TO RELATED APPLICATIONS/INCORPORATION BY REFERENCE

This patent application makes reference to, claims priority to and claims the benefit from United States Provisional Patent Application Serial No. 61304114 filed on February 12, 2010.

This application also makes reference to:
United States Application Serial No. _________ (Attorney Docket No. 21005US02) filed on even date herewith; and
United States Application Serial No. _________ (Attorney Docket No. 21023US02) filed on even date herewith.

Each of the above stated applications is hereby incorporated herein by reference in its entirety.

### FIELD OF THE INVENTION

Certain embodiments of the invention relate to communication systems. More specifically, certain embodiments of the invention relate to a method and system for determining the location of a wireless access point using single device based power measurements.

### BACKGROUND OF THE INVENTION

Location-based services (LBS) are emerging as a new type of value-added service provided by mobile communication network. LBS are mobile services in which the user location information is used in order to enable various LBS applications such as, for example, enhanced 911 (E-911), location-based 411, location-based messaging and/or location-based friend finding services. A location of a mobile device may be determined in different ways such as, for example, using network-based technology, using terminal-based technology, and/or hybrid technology (a combination of the former technologies). Many positioning technologies such as, for example, Time of Arrival (TOA), Observed Time Difference of Arrival (OTDOA), Enhanced Observed Time Difference (E-OTD) as well as the Global navigation satellite-based systems (GNSS) such as GPS, GLONASS, Galileo, and/or Assisted-GNSS (A-GNSS), are in place to estimate the location (latitude and longitude) of the mobile device and convert it into a meaningful X, Y coordinate for LBS applications. A-GNSS technology combines satellite positioning and communication networks such as mobile networks to reach performance levels allowing the wide deployment of Location-Based Services.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for determining the location of a wireless access point using single device based power measurements, substantially as shown in and/or described in connection with at least one of the figures, as set forth more completely in the claims.
According to an aspect, a method for communication is provided, the method comprising:
performing by one or more processors and/or circuits in a mobile device:
   measuring power from different locations for an encountered wireless access point; and
   communicating said power measurements to a remote location server, wherein said remote location server collects power measurements for said encountered wireless access point from a plurality of communication devices, and said location server determines a location of said encountered wireless access point using power measurements provided by a single communication device of said plurality of communication devices.
Advantageously, said wireless access point is a WiFi access point or a Bluetooth access point.
Advantageously, the method further comprises measuring said power on said encountered access point at different locations over a period of time.
Advantageously, the method further comprises time stamping said power measurements.
Advantageously, the method further comprises transmitting said time stamped power measurements to said remote location server.
Advantageously, said remote location server selects said single communication device from said plurality of communication devices based on quality and/or availability of corresponding power measurements collected on said encountered wireless access point.
Advantageously, said remote location server receives a plurality of power measurements at different locations over a time period on said encountered wireless access point from said selected single communication device.
Advantageously, said remote location server determines said location of said encountered wireless access point utilizing said received plurality of power measurements from said selected single communication device.
Advantageously, said remote location server stores said determined location of said wireless access point into a reference database that is internally or externally coupled to said remote location server.
Advantageously, said reference database shares said stored location of said wireless access point among said plurality of communication devices.
According to an aspect, a system for communication comprises:
one or more processors and/or circuits in a mobile device:
   measure power from different locations for an encountered wireless access point; and
   communicate said power measurements to a remote location server, wherein said remote location server collects power measurements for said encountered wireless access point from a plurality of communication devices, and said location server determines a location of said encountered wireless access point using power measurements provided by a single communication device of said plurality of communication devices.
Advantageously, said wireless access point is a WiFi access point or a Bluetooth access point.
Advantageously, said one or more processors and/or circuits are operable to measure said power for said encountered access point at different locations over a period of time.
Advantageously, said one or more processors and/or circuits are operable to time stamp said power measurements.
Advantageously, said one or more processors and/or circuits are operable to transmit said time stamped power measurements to said remote location server.
Advantageously, said remote location server selects said single communication device from said plurality of communication devices based on quality and/or availability of corresponding power measurements collected on said encountered wireless access point.
Advantageously, said remote location server receives a plurality of power measurements at different locations over a time period on said encountered wireless access point from said selected single communication device.
Advantageously, said remote location server determines said location of said encountered wireless access point utilizing said received plurality of power measurements from said selected single communication device.
Advantageously, said remote location server stores said determined location of said wireless access point into a reference database that is internally or externally coupled to said remote location server.
Advantageously, said reference database shares said stored location of said wireless access point among said plurality of communication devices.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary communication system that is operable to determine the location of a wireless access point using single device based power measurements, in accordance with an embodiment of the invention.

FIG. 2 is a block diagram illustrating an exemplary mobile device that is operable to provide power measurements at different time instants on a wireless access point, in accordance with an embodiment of the invention.

FIG. 3 is a block diagram illustrating an exemplary location server that is operable to locate a wireless access point utilizing single device based power measurements, in accordance with an embodiment of the invention.

FIG. 4 is a flow chart illustrating an exemplary procedure that is utilized to determine the location of a wireless access point using single device based power measurements, in accordance with an embodiment of the invention, in accordance with an embodiment of the invention.

### DETAILED DESCRIPTION OF THE INVENTION

Certain embodiments of the invention may be found in a method and system for determining the location of a wireless access point using single device based power measurements. In various embodiments of the invention, a mobile device may be operable to measure power from different locations for an encountered wireless access point, namely, a WiFi access point or a Bluetooth access point. The power measurements may be communicated to a remote location server. The remote location server may collect power measurements, for the encountered wireless access points, from a plurality of communication devices. The location of the encountered wireless access point may be determined by the remote location server utilizing corresponding power measurements provided by a single communication device. The mobile device may be configured to measure the power for the encountered wireless access point from different locations or distances and over a period of time. The mobile device may time stamp the power measurements and transmit the time-stamped power measurements to the remote location server. The remote location server may be operable to select the single communication device from the plurality of communication devices based on quality and/or availability of corresponding power measurements collected for the encountered wireless access point. The remote location server receives or collects a plurality of power measurements from the selected single communication device. The collected plurality of power measurements are performed by the selected single communication device at different locations. The remote location server utilizes the collected plurality of power measurements from the selected single communication device to determine or calculate the location of the encountered wireless access point. The remote location server may store the determined location of the encountered wireless access point into an internally or externally coupled reference database so as to share the determined location of the encountered wireless access point among the plurality of communication devices.

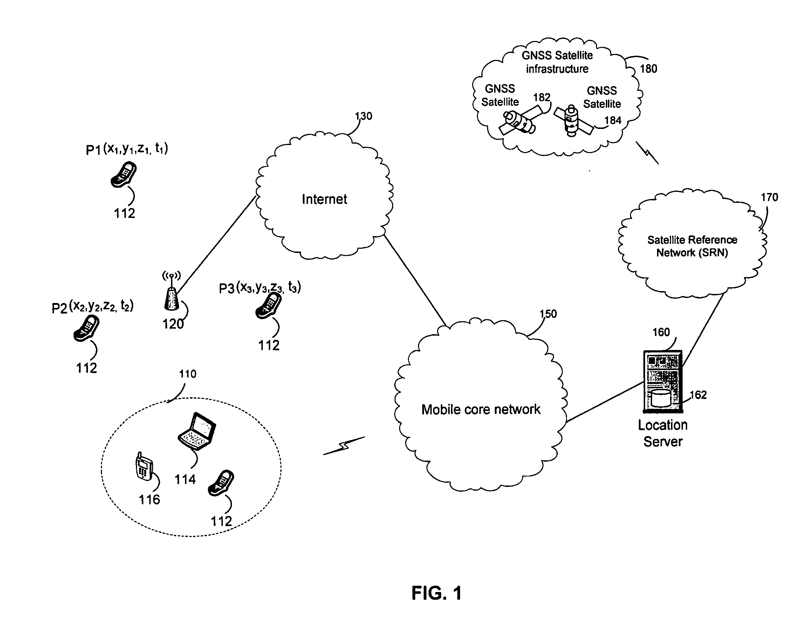

FIG. 1 is a diagram illustrating an exemplary communication system that is operable to determine the location of a wireless access point using single device based power measurements, in accordance with an embodiment of the invention. Referring to FIG. 1, there is shown a communication system 100. The communication system 100 comprises a plurality of mobile devices 110, of which mobile devices 112-116 are illustrated, a wireless access point 120, an Internet 130, a mobile core network 150, a location server 160 comprising a reference database 162, a satellite reference network (SRN) 170 and a Global Navigation Satellite Systems (GNSS) satellite infrastructure 180. The satellite infrastructure 180 comprises a plurality of GNSS satellites, of which GNSS satellites 182-184 are illustrated.

A mobile device such as the mobile device 112 may comprise suitable logic, circuitry, interfaces and/or code that are operable to receive services provided by the Internet 130 and/or the mobile core network 150. For example, the mobile device 112 may be operable to access to the Internet 130 via a wireless access point such as the wireless access point 120 utilizing, for example, Wi-Fi or Bluetooth technologies. Depending on device capabilities, the mobile device 112 may be operable to communicate with the mobile core network 150 using, for example, CDMA, GSM, UMTS, LTE and WiMAX access technologies.

The mobile device 112 may be operable to capture or identify encountered wireless access points located in a specific geographic area. The mobile device 112 may be configured to measure power for the encountered wireless access point such as the wireless access point 120. In this regard, the power measurements for the wireless access point 120 may be performed by the mobile device 112 at different locations such as, for example, locations P1-P3, over a period of time. The power measurements may be time stamped. The mobile device 112 may be operable to provide or communicate the time stamped power measurements to the location server 160 over the mobile core network 150.

The wireless access point 120 may comprise suitable logic, circuitry, interfaces and/or code that are operable to connect wireless communication devices to a wireless or wired network using Wi-Fi, Bluetooth or related standards. The wireless access point 120 may be configured to function as a central transmitter and receiver of a wireless local network (WLAN). The wireless access point 120 may be operable to provide data services such like LBS applications to wireless LAN enabled communication devices such as, for example, the mobile devices 112-116, utilizing a wireless LAN technology. The location of the wireless access point 120 may be required or needed for LBS applications such as location-based access control. The location of the wireless access point 120 may be tracked in the reference database 162 via the location server 160. In this regard, the location of the wireless access point 120 may be determined in the reference database 162 based on power measurements provided by a single mobile device such as the mobile device 112. The provided power measurements for the wireless access point 120 may be carried out by the mobile device 112 at different locations such as locations P1-P3 over a period of time.

The Internet 130 may comprise suitable logic, circuitry, interfaces and/or code that are operable to support data communication using Internet Protocols (IP). The Internet 130 may deliver various data services, for example, a location-based access control, to users allowing users to manage or control access to a particular wireless access point such as the wireless access point 120 according to corresponding location information.

The mobile core network 150 may comprise suitable logic, circuitry, interfaces and/or code that are operable to interface various access networks such as, for example, a CDMA network, a UMTS network and/or a WiMAX network, with external data networks such as packet data networks (PDNs) and/or the Internet 130. The mobile core network 150 may be configured to communicate various data services, which are provided by external data networks, to associated users such as, for example, the mobile devices 112-116. In instances where a LBS application is provided to a user such as the mobile device 112, the mobile core network 150 may be operable to communicate with the location server 160 for location information required for the LBS application.

The location server 160 may comprise suitable logic, circuitry, interfaces and/or code that are operable to access the satellite reference network (SRN) 170 to collect GNSS satellite data by tracking GNSS constellations through the SRN 170. The location server 160 may be operable to utilize the collected GNSS satellite data to generate GNSS assistance data (A-GNSS data) comprising, for example, ephemeris data, LTO data, reference positions and/or time information. The location server 160 may be operable to collect and/or retrieve location information from associated users such as the wireless access point 120 and/or the mobile devices 112-116. For example, the location server 160 may be operable to retrieve and/or track location information of the wireless access point 120 from the mobile devices 112-116. Specifically, the location server 160 may receive power measurements for the wireless access point 120 from a plurality of associated users such as the mobile devices 112-116. The location server 160 may be operable to select a single user such as the mobile device 112 based on, for example, quality and availability of corresponding power measurements provided. The quality of power measurements for the wireless access point 120 may refer to, for example, signal to noise ratio (SNR) or signal to noise and interference ratio (SNIR), measurement variance, and/or measurement time period. A mobile device providing power measurements with, for example, high SNR or SNIR, lower measurement variance, and/or longer measurement time period may be selected from the plurality of associated users. The location of the wireless access point 122 may be determined or calculated based on the power measurements provided by the selected single mobile device such as the mobile device 112. For example, the location server 160 may be operable to determine the location of the wireless access point 122 by fitting the received power measurements provided by the mobile device 112 to a power profile for the wireless access point 120. The determined location of the wireless access point 120 may be stored in the reference database 162 in order to share among associated mobile devices such as the mobile device 116. The location server 160 may be operable to communicate the stored location of the wireless access point 120 as A-GNSS data to the mobile device 116, when need. The reference database 162 may be internally or externally coupled to the location server 160. The reference database 162 may be refined or updated using the retrieved location information.

The SRN 170 may comprise suitable logic, circuitry, interfaces and/or code that are operable to collect and/or distribute data for GNSS satellites on a continuous basis. The SRN 170 may comprise a plurality of GNSS reference tracking stations located around the world to provide A-GNSS coverage all the time in both a home network and/or any visited network.

The GNSS satellites 182-184 may comprise suitable logic, circuitry, interfaces and/or code that may be operable to generate and broadcast satellite navigational information. The broadcast satellite navigational information may be collected by the SRN 170 to be utilized by the location server 160 to enhance LBS performance. The GNSS satellites 182-184 may comprise GPS, Galileo, and/or GLONASS satellites.

In an exemplary operation, a mobile device such as the mobile device 112 may be operable to identify an encountered wireless access point, for example, the wireless access point 120, located in a geographic area of interest. The mobile device 112 may be configured to measure power at different locations such as locations P1-P3 over a period of time for the wireless access point 120. The mobile device 112 may be operable to time stamp the power measurements and transmit the time-stamped power measurements to the location server 160. The location server 160 may track location of associated communication devices such as, for example, the wireless access point 120, by collecting power measurements for the wireless access point 120 from a plurality of mobile devices such as the mobile devices 112-116. In this regard, a single mobile device such as the mobile device 112 may be selected based on the quality and/or availability of corresponding power measurements provided for the wireless access point 120. The power measurements for the wireless access point 120 that are collected at different locations over a period of time by the selected single mobile device may be utilized by the location server 160 to determine or calculate the location of the wireless access point 120. The determined location of the wireless access point 120 may be stored into the reference database 162 to be shared among the plurality of mobile devices when need. For example, the location server 160 may be operable to transmit the determined location of the wireless access point 120 to a mobile device such as the mobile device 116 when requested.

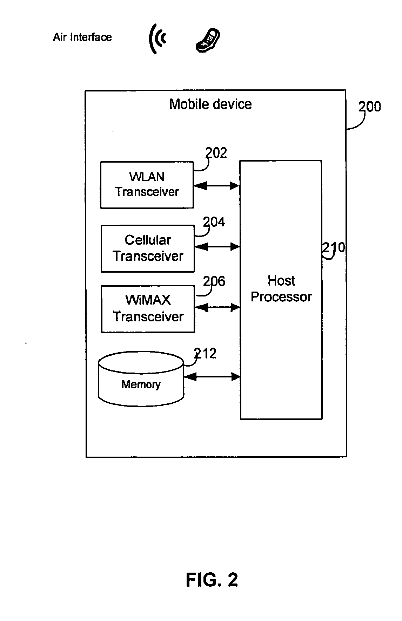

FIG. 2 is a block diagram illustrating an exemplary mobile device that is operable to provide power measurements at different time instants on a wireless access point, in accordance with an embodiment of the invention. Referring to FIG. 2, there is shown a mobile device 200. The mobile device 200 comprises a WLAN transceiver 202, a cellular transceiver 204, a WiMAX transceiver 206, a host processor 210 and a memory 212.

The WLAN transceiver 202 may comprise suitable logic, circuitry, interfaces and/or code that may be operable to receive and/or transmit radio frequency signals using wireless LAN technology. The power of radio signals received over the WLAN transceiver 202 may be measured over a period of time and/or at different locations.

The cellular transceiver 204 may comprise suitable logic, circuitry, interfaces and/or code that may be operable to communicate with the mobile core network 150 using various cellular access technologies such as CDMA, GSM, UMTS and/or LTE. The cellular transceiver 204 may receive various data services such as LBS applications provided by the mobile core network 150. The cellular transceiver 204 may be operable to communicate with the location server 160 for location information such as the location of the wireless access point 122 to support LBS application dedicated to the mobile device 200. The cellular transceiver 204 may be configured to provide power measurements over a period of time and/or at different locations for the wireless access point 120 so as to determine the location of the wireless access point 120 in the reference database 162.

The WiMAX transceiver 206 may comprise suitable logic, circuitry, interfaces and/or code that may be operable to communicate with the mobile core network 150 using WiMAX access technology. The WiMAX transceiver 206 may receive various data services such as LBS applications provided by the mobile core network 150. The WiMAX transceiver 206 may be operable to communicate with the location server 160 for location information such as the location of the wireless access point 122 to support LBS application dedicated to the mobile device 200. The WiMAX transceiver 206 may be configured to provide power measurements over a period of time and/or at different locations for the wireless access point 120 so as to determine the location of the wireless access point 120 in the reference database 162.

The host processor 210 may comprise suitable logic, circuitry, interfaces and/or code that may be operable to manage and/or control operations of associated device component units such as the WLAN transceiver 202, the cellular transceiver 204 and the WiMAX transceiver 206 depending on usages. For example, the host processor 210 may be operable to activate or deactivate one or more associated radios such as the WLAN transceiver 202 and/or the cellular transceiver 204 as a needed basis to save power. The host processor 210 may be configured to calculate or measure power on signals received over, for example, the WLAN transceiver 202 over a period of time and/or at different locations. The power measurement may be time stamped and transmitted to the location server 160 via the cellular transceiver 204 and/or the WiMAX transceiver 206.

The memory 212 may comprise suitable logic, circuitry, interfaces and/or code that may be operable to store information such as executable instructions and data that may be utilized by the host processor 210 and/or other associated device components such as, for example, the WLAN transceiver 202 and the cellular transceiver 204. For example, the memory 202 may store time stamped power measurements over a period of time for the wireless access point 120. The stored power measurements may be collected at different locations such as locations P1-P3. The memory 212 may comprise RAM, ROM, low latency nonvolatile memory such as flash memory and/or other suitable electronic data storage.

In an exemplary operation, the host processor 210 may be operable to manage and/or control operations of, for example, the WLAN transceiver 202 and the cellular transceiver 204, depending on corresponding usages. The power of signals received over the WLAN transceiver 202 may be measured or calculated over a period of time. The power measurements may be performed at different locations such as the locations P1-P3. The power measurements may be time-stamped and stored into the memory 212. The host processor 210 may be operable to transmit the stored power measurements for the wireless access point 120 to the location server 160 over the cellular transceiver 204 and/or the WiMAX transceiver 206.

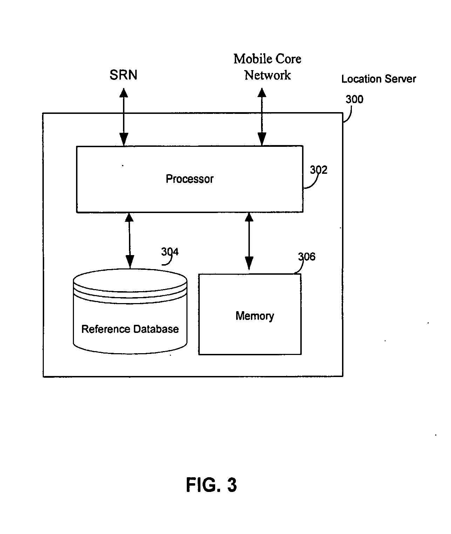

FIG. 3 is a block diagram illustrating an exemplary location server that is operable to locate a wireless access point utilizing single device based power measurements, in accordance with an embodiment of the invention. Referring to FIG. 3, there is shown a location server 300. The location server 300 may comprise a processor 302, a reference database 304 and a memory 306.

The processor 302 may comprise suitable logic, circuitry, interfaces and/or code that may be operable to manage and/or control operations of the reference database 304 and the memory 306. The processor 302 may be operable to communicate with the satellite reference network (SRN) 150 so as to collect GNSS satellite data by tracking GNSS constellations through the SRN 150. The processor 302 may utilize the collected GNSS satellite data to build the reference database 304, which may be coupled internally or externally to the location server 300. The processor 302 may be operable to retrieve or collect location information from associated users such as the mobile device 112-116. In this regard, the processor 302 may receive power measurements for the wireless access point 120 from a plurality of associated users such as the mobile devices 112-116. The processor 302 may be operable to select a single user such as the mobile device 112 based on, for example, quality and availability of corresponding power measurements provided. The processor 302 may select a single mobile device providing power measurements with higher SNR or SNIR, lower measurement variance, and/or longer measurement time period for the location of the wireless access point 120. The processor 302 may be operable to determine or calculate the location of the wireless access point 120 based on the power measurements provided by the selected single mobile device. For example, the processor 302 may be operable to fit the received power measurements provided by the selected single mobile device so as to determine the location of the wireless access point 120. The determined location of the wireless access point 120 may be stored into the reference database 304, where it may be shared among associated users or communication devices. For example, the processor 302 may be operable to communicate at least a portion of the reference database 304 with, for example, the mobile device 200 as a needed basis or periodically.

The reference database 304 may comprise suitable logic, circuitry, interfaces and/or code that may be operable to store location information of associated communication devices such as, for example, the wireless access point 120. The reference database 304 may be internally or externally coupled to the location server 300. The stored location information may be provided to associated communication devices such as the mobile device 112 to support LBS applications. The location database 304 may be operable to manage and update the stored location information when need, aperiodically or periodically.

The memory 306 may comprise suitable logic, circuitry, interfaces and/or code that may be operable to store information such as executable instructions and data that may be utilized by the processor 302 and/or other associated component units such as, for example, the reference database 304. The memory 306 may comprise RAM, ROM, low latency nonvolatile memory such as flash memory and/or other suitable electronic data storage.

In an exemplary operation, the processor 302 may be operable to collect GNSS satellite data through the SRN 150 to build the reference database 304. The processor 302 may be operable to track location information of associated users such as the wireless access point 120 by collecting power measurement for the wireless access point 120 from a plurality of mobile devices such as the mobile devices 112-116. Power measurements collected from a single mobile device such as the mobile device 112 may be utilized by the host processor 302 to determine or calculate the location of the wireless access point 120. The calculated location of the wireless access point 120 may be stored into the reference database 304, where it may be shared among the plurality of associated users.

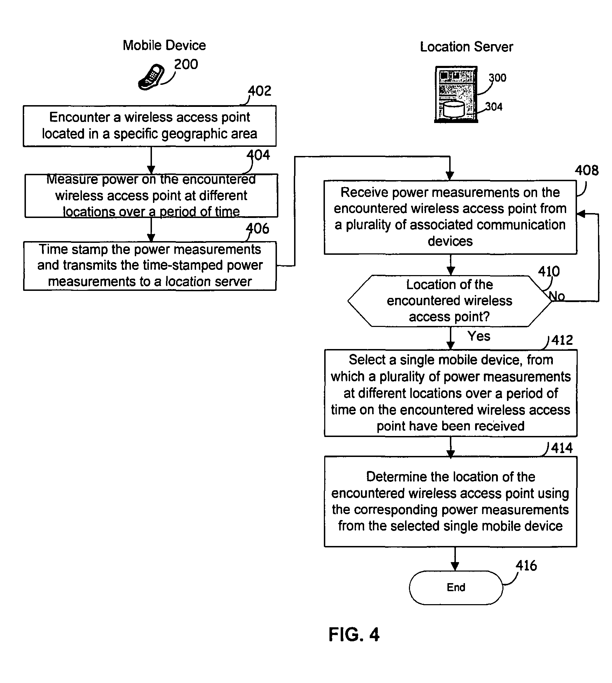

FIG. 4 is a flow chart illustrating an exemplary procedure that is utilized to determine the location of a wireless access point using single device based power measurements, in accordance with an embodiment of the invention, in accordance with an embodiment of the invention. Referring to FIG. 4, the exemplary steps may start with step 402. In step 402, the mobile device 200 may be operable to identify or encounter a wireless access point such as the wireless access point 120 located in a specific geographic area. In step 404, the mobile device 200 may be operable to measure power for the encountered wireless access point, namely, the wireless access point 120, over a period of time. The power measurements may be performed at different locations such as the locations P1-P3. In step 406, the mobile device 200 may be operable to time stamp the power measurements and transmit the time-stamped power measurements to the location server 300 via the mobile core network 150.

In step 408, the location server 300 may be operable to receive power measurements for the encountered wireless access point from a plurality of associated mobile devices such as the mobile device 112-116. In step 410, it may be determined whether the location of the encountered wireless access point needs to be determined. In instances where the location of the encountered wireless access point needs to be determined, then in step 412, the location server 300 may select a single mobile device such as the mobile device 112 based on the quality and/or availability of corresponding power measurements for the wireless access point 120 provided. In step 414, the location server 300 may be configured to determine or calculate the location of the encountered wireless access point utilizing the power measurements collected from the selected single mobile device. In step 416, the calculated location of the encountered wireless access point may be stored into the reference database 304 to share among the plurality of associated mobile devices. The exemplary steps may end in step 416.

In step 410, in instances where the location of the encountered wireless access point does not need to be determined, then the exemplary step may return to step 408.

In various exemplary aspects of the method and system for determining the location of a wireless access point using single device based power measurements, a mobile device such as the mobile device 200 may be operable to measure power from different locations for an encountered wireless access point such as the wireless access point 120. The power measurements may be communicated to a remote location server such as the location server 300. The location server 300 may be operable to collect power measurements for the wireless access point 120 from a plurality of communication devices such as, for example, the mobile devices 112-116. The location of the wireless access point 120 may be determined or calculated utilizing corresponding power measurements provided by a single communication device such as the mobile device 112 from the plurality of communication devices. The wireless access point 120 may be a WiFi access point or a Bluetooth access point. The mobile device 112 may be operable to measure the power for the wireless access point 120 at different locations such as the locations P1-P3 and over a period of time. The mobile device 112 may time stamp the power measurements and transmit the time-stamped power measurements for the wireless access point 120 to the location server 300. The location server 300 may be operable to select the single communication device from the plurality of communication devices based on quality and/or availability of corresponding power measurements collected for the wireless access point 120. The location server 300 receives a plurality of power measurements, from different locations or distances, over a time period for the wireless access point 120 from the selected single communication device. The location server 300 utilizes the received plurality of power measurements from the selected single communication device to determine or calculate the location of the wireless access point 120. The location server 300 may store the determined location of the wireless access point 120 into the reference database 304, which may be internally or externally coupled to the location server 300. The reference database 304 may share, for example, the stored location of the wireless access point 120, among the plurality of communication devices such as the mobile devices 112-116.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for determining the location of a wireless access point using single device based power measurements.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
performing by one or more processors and/or circuits in a mobile device:
measuring power from different locations for an encountered wireless access point; and
communicating said power measurements to a remote location server, wherein said remote location server collects power measurements for said encountered wireless access point from a plurality of communication devices, and said location server determines a location of said encountered wireless access point using power measurements provided by a single communication device of said plurality of communication devices.

2. The method according to claim 1, wherein said wireless access point is a WiFi access point or a Bluetooth access point.

3. The method according to claim 1, comprising measuring said power on said encountered access point at different locations over a period of time.

4. The method according to claim 3, comprising time stamping said power measurements.

5. The method according to claim 4, comprising transmitting said time stamped power measurements to said remote location server.

6. The method according to claim 1, wherein said remote location server selects said single communication device from said plurality of communication devices based on quality and/or availability of corresponding power measurements collected on said encountered wireless access point.

7. The method according to claim 6, wherein said remote location server receives a plurality of power measurements at different locations over a time period on said encountered wireless access point from said selected single communication device.

8. The method according to claim 7, wherein said remote location server determines said location of said encountered wireless access point utilizing said received plurality of power measurements from said selected single communication device.

9. The method according to claim 8, wherein said remote location server stores said determined location of said wireless access point into a reference database that is internally or externally coupled to said remote location server.

10. The method according to claim 9, wherein said reference database shares said stored location of said wireless access point among said plurality of communication devices.

11. A system for communication, the system comprising:
one or more processors and/or circuits in a mobile device:
measure power from different locations for an encountered wireless access point; and
communicate said power measurements to a remote location server, wherein said remote location server collects power measurements for said encountered wireless access point from a plurality of communication devices, and said location server determines a location of said encountered wireless access point using power measurements provided by a single communication device of said plurality of communication devices.

12. The system according to claim 11, wherein said wireless access point is a WiFi access point or a Bluetooth access point.

13. The system according to claim 11, wherein said one or more processors and/or circuits are operable to measure said power for said encountered access point at different locations over a period of time.

14. The system according to claim 13, wherein said one or more processors and/or circuits are operable to time stamp said power measurements.

15. The system according to claim 14, wherein said one or more processors and/or circuits are operable to transmit said time stamped power measurements to said remote location server.
